# EUROPEAN PATENT APPLICATION

(11) **EP 3 051 478 A1**
(43) Date of publication of application: **03.08.2016**
(21) Application number: 15153516.8
(22) Date of filing: 02.02.2015
(51) Int. Cl.: G06Q 20/32, G07F 13/02

(54) **Increasing the throughput of filling stations**

(71) Applicant: ThinxNet GmbH, 80469 München (DE)
(72) Inventor: GÖTZ, Oliver, 82166 Gräfelfing (DE); HUTSZCHENREUTER, Jens, 70193 Stuttgart (DE)
(74) Representative: Dendorfer, Claus

(57) **Abstract**

A method for activating a filling pump of a filling station comprises receiving, from a vehicle, location information of the vehicle, determining, based on the received location information, that the vehicle is at a filling station; and sending, to the filling station, a filling pump activation command that causes the filling station to activate an available filling pump of the filling station for the purpose of a filling operation. The disclosure further comprises a method for requesting a server to activate a filling pump of a filling station, a server, an on-board device to be installed in a vehicle, and a computer-readable medium.

## Description

### BACKGROUND OF THE INVENTION

The present disclosure relates to the field of controlling a filling pump of a filling station.

### BRIEF DESCRIPTION OF THE DRAWINGS

The following aspects of the disclosure will become more readily appreciated as the same become better understood by reference to the following detailed description, when taken in conjunction with the accompanying drawing figures.
FIG. 1 illustrates a hardware overview of a system comprising at least one vehicle equipped with an on-board device, at least one filling station control system and a server, according to an embodiment of the present disclosure;
FIG. 2 illustrates a logical overview of the system comprising at least one vehicle on-board device, at least one filling station control system and a server, according to an embodiment of the present disclosure;
FIG. 3 illustrates a vehicle equipped with an on-board device located at a filling pump of a filling station, according to an embodiment of the present disclosure;
FIG. 4 illustrates a method for activating a filling pump of a filling station, according to an embodiment of the present disclosure;
FIG. 5 illustrates a data relationship model of the data involved in the system, according to an embodiment of the present disclosure; and
FIG. 6 illustrates an embodiment where at least one of the server, the filling station control system and the vehicle on-board device is implemented in a computer system, according to an embodiment of the present disclosure.

### DETAILED DESCRIPTION OF EXEMPLARY EMBODIMENTS

### Overview

The systems, methods, and devices described herein each have several aspects, no single one of which is solely responsible for its desirable attributes. Without limiting the scope of this disclosure, several non-limiting features will now be discussed briefly.

The present disclosure relates to a method and system to activate a filling pump of a filling station. Specifically, the present disclosure is based on the idea of equipping a vehicle with an on-board device that collects vehicle related data, the vehicle related data comprising at least location information of the vehicle, and transmitting the vehicle related data to a server. The server is configured to analyze the received vehicle related data. The server is at least capable of determining a location, e.g. longitude and latitude, or any other reference to a location such as an address or an identification code, or a mobility status of a vehicle, e.g. "parking", "driving", "preparing to fuel" or "fueling". In some embodiments, the mobility status may be determined with higher reliability as the on-board device transmits further data, e.g. operational data of the vehicle such as the filling status of the vehicle's fuel tank, to the server. In some embodiments, the on-board device transmits at least one of a user identification and a vehicle identification, thereby allowing the server to identify the user that is going to perform the filling operation and/or the vehicle that is going to be filled.

Based at least on the received location information, the server determines whether the vehicle is at a filling station. This will usually involve a determination whether the current location of the vehicle is within a certain range of the filling station's coordinates. In some embodiments, additional information can be taken into account, such as the route the vehicle took to its present location, the filling level of the vehicle's fuel tank, or user input. In some cases, the accuracy may be sufficiently high to determine not only the presence of the vehicle at the filling station, but also distinguish at which one of the individual fuel pumps of the filling station the vehicle is located.

The server verifies that the service of the present disclosure is available to the vehicle and/or the user, e.g. that the user is registered for the service and is in good standing. If this is the case, then the server causes a certain filling pump of the filling station to be activated. This may involve the server sending a command to a control device of the filling station, which in turn activates the filling pump that may be indicated in the command. The filling pump may be chosen depending on the current location of the vehicle if this position can be determined with a high degree of accuracy, and/or depending on user input. In one embodiment, the server contacts the user via another channel such as at the user's smartphone, and asks the user to select one of the available filling pumps. The user selection of an available filling pump can optionally be an extra qualification of the start of a tank filling process.

After the user has filled the fuel tank of the vehicle, the server records the filling operation for payment purposes. In some embodiments, the entity operating the server (the "operating entity") also processes the payment by virtue of a contract between the operating entity and the user. For example, the user may have authorized the operating entity to debit any incurred charges from the user's bank account. In other embodiments, a third party payment processor (e.g., a credit card company) is used, to which the server transmits all required data. The transaction fees of the third party payment processor are expected to be quite low, as the present invention provides proof of the physical presence of the on-board device - and usually also the vehicle - at the filling station and can also implement further fraud prevention measures.

The location may be determined by a receiver of a satellite navigation system, e.g. a Global Positioning System (GPS) receiver, which generates position data accessible to the on-board device. Alternatively or additionally, the location may be determined by a proximity sensor like a Bluetooth button that communicates with the on-board device. In some embodiments, the location may be determined without direct interaction with the on-board device, e.g. by a camera that identifies the vehicle at a filling station, e.g. by recognizing the license plate and matching recognized information with a vehicle identification or with an identification of the on-board device. Vehicle related data may include one or more of current speed, the amount of available fuel, the status of the ignition system, the event of locking and unlocking of one or more doors, the status that one or more doors is/are locked or unlocked, the event of opening or closing one or more doors, the number of passengers, the seat position, and so on.

The change in filling level due to a filling operation may be recorded by the on-board device and/or transmitted to the server. This measure increases the security against fraud or malfunction. The data corresponding to vehicle related parameters may be obtained from the vehicle via a diagnosis or control port, e.g. an OBD, OBD2, or EOBD port. The vehicle related data may be transmitted via a communication module, e.g. based on data communication of Global System for Mobile Communication (GSM), Universal Mobile Telecommunications System (UMTS), or Long-Term Evolution (LTE) networks. Alternatively or additionally, vehicle related data may be transmitted via a Wireless Local Area Network (WLAN) or a Bluetooth device or other near field communication in proximity to the vehicle.

In some embodiments, the on-board device sends the collected vehicle related data in real-time to the server. In other embodiments, the on-board device determines the present time, generates a time stamp and buffers the collected vehicle related data together with the time stamp. The vehicle related data is transmitted to the server in regular intervals or as soon as data communication is possible. In other embodiments, vehicle related data is transferred event based, e.g. when the vehicle has stopped for a certain amount of time.

In some embodiments, the on-board device and the vehicle are securely paired to ensure that the on-board device may not be removed or decoupled from the vehicle and used in another vehicle. In one embodiment, the vehicle has an integrated functionality equivalent to an externally installed on-board device. All embodiments may refer to both on-board devices that are external to the vehicle and on-board devices that are an integrated part of the vehicle.

The on-board device may determine the present time based on time information provided by the satellite navigation system, or based on time information obtained from vehicle related data, or based on an internal clock.

In some embodiments, the server processes the received vehicle related data and determines data patterns for each vehicle, e.g. time and location patterns. By analyzing the vehicle related data, the server is able to determine a mobility status of the vehicle with a high degree of certainty, e.g. whether the vehicle is currently in a state of "parking", "driving", "preparing to fuel" or "fueling". This distinction is relevant for distinguishing a case where a vehicle passes a filling station without stopping (mobility status "driving"), parks at or close to a filling station (mobility status "parking"), or stops at a filling station for the purpose of fueling. Only in the latter case, a mobility status of "preparing to fuel" should be detected. As a general rule, it can be assumed that the more vehicle related data the server receives from the on-board device, the higher the probability will be that the assumed mobility status reflects the actual situation.

In some embodiments, the vehicle is considered as currently in the state of "driving" when the vehicle is moving or making a short stop, such as at a red traffic light. The server may determine the mobility status based on the status of the ignition system and/or the current vehicle speed and/or map information and/or a (changing) number of passengers detected in the vehicle. A mobility status of "preparing to fuel" may be assumed, e.g. when the ignition system indicates that the engine is off and when the present location is determined as being within the range of a filling station, preferably within the range of a certain filling pump if the location information provides sufficient precision for this distinction. In case of filling stations that require self service for fueling, an opened vehicle door can, in some embodiments, be used by the on-board device in order to let the server assume a mobility status of "preparing to fuel". The server will assume a mobility status of "fueling" if the on-board device transmits an increasing fuel level of the fuel tank to the server. In some embodiments, the filling station reports an ongoing filling operation to the server, thereby causing a change of the mobility status of the respective vehicle to "fueling". The server will assume a mobility status of "parking" or, in some embodiments, "fueling ended", when the fuel level received at the server remains constant for a while and when the vehicle remains in an ignition status where the engine is off. Alternatively or additionally, the server may receive a filling record provided by the filling station that indicates the end of the filling operation.

Throughput at the filling pump is increased, as identifying the vehicle through its on-board device allows the filling station to re-activate the same filling pump for the next vehicle immediately after the filling operation of the vehicle has ended. The end of the filling operation may be detected at least by one of detecting a stop of the increase of the filling level of the fuel tank of the vehicle over a certain period of time, an event of switching on the ignition to restart the vehicle, and/or by location information indicating that the vehicle leaves the filling station. The vehicle may leave the filling station without a manual payment operation or with a payment operation that is processed within the vehicle. Even if the driver decides to perform a "usual" (e.g., cash) payment operation at the filling station's shop for any reason, the driver will be allowed to leave the filling pump immediately after the end of the filling operation, and the filling pump will immediately be re-activated for the next vehicle. In contrast, conventional filling procedures require that the payment process must be completed at the filling station's shop before the filling pump may be re-activated for the next vehicle.

Users of a vehicle equipped with the on-board device may register at the server. Upon user registration, an identifier uniquely identifying the on-board device is assigned to the user. Drivers of the vehicle may automatically be registered as users upon purchasing or renting the vehicle. A user may receive a reward or may become a member of a loyalty scheme upon registration. For example, one kind of reward may be a credit or discount at certain filling stations.

In some embodiments, any person, not only drivers of vehicles with an on-board device, may register at the server as passengers of vehicles equipped with an on-board device. This registration may be independent from an assigned on-board device. The presence of passengers of a vehicle may be recognized by on-board devices through a detected mobile communication device like a smartphone that is assigned to the registered user. Thus, filling operations may be assigned to the registered user when the presence of the user is detected by the on-board device.

The server may assign the vehicle related data received from the on-board device to an on-board device identification number corresponding to a unique on-board device. Alternatively or additionally, the received vehicle related data may be assigned to the vehicle to which the on-board device is connected. The vehicle may be identified by a set of vehicle related parameters from which a vehicle fingerprint is generated. In some embodiments, the vehicle is identified by a unique vehicle identification number retrieved by the on-board device. In other embodiments, the received vehicle related data is assigned to the registered user.

The server may communicate with users, e.g. via email, SMS, MMS, push notifications, chat messages, smartphone applications, and computer programs. In some embodiments, the vehicle is equipped with a communication device which allows the server to communicate with a user in the vehicle such as by playing a sound or activating a buzzer, displaying information or requesting user input. The server could potentially communicate with an application built into the vehicle.

In some embodiments, a filling station offers automatic payment upon identifying a user via the server that detects a vehicle with a corresponding on-board device located at the premises of the filling station.

In some embodiments, the on-board device may be configured to control which kind of the collected vehicle related data is transferred to the server or which of the vehicle related data is collected at all. The on-board device may be configured to temporarily prohibit the collecting of certain vehicle related data or the transferring of collected vehicle related data to the server (privacy mode). The on-board device may further be configured to provide fuzzy location information and/or vehicle related data with a defined degree of inaccuracy. The on-board device may be configured to restrict the transferring of location information and/or vehicle related data to those points in time when changing between a parking state and an driving state, so that the server is only aware of the start point and the end point of a route but not about the driven route in between.

### Summary of the Disclosure

The present invention is defined by the independent claims, taking due account of any element which is equivalent to an element specified in the claims. The dependent claims concern optional features of the invention.

### Definitions

In order to facilitate an understanding of the systems and methods discussed herein, a number of terms are defined below. The terms defined below, as well as other terms used herein, should be construed to include the provided definitions, the ordinary and customary meaning of the terms, and/or any other implied meaning for the respective terms. Thus, the definitions below do not limit the meaning of these terms, but only provide exemplary definitions.

### Server

The term "server" includes any server system with one or more computing devices for processing information received from a plurality of on-board devices. The server may have further functions, such as, for example, configuring the on-board devices or providing user interfaces over the Internet or a mobile communication network. Users of the server may be vehicle users and/or interested parties that are allowed to access the collected data for marketing purposes. The server interacts with filling stations to activate and deactivate filling pumps that are in proximity to a vehicle when the user has the intention to fill up the fuel tank of his or her vehicle.

### On-Board Diagnosis System

The term "on-board diagnosis system" includes any system implemented in a vehicle to provide at least diagnostic information. The on-board diagnosis system may further provide access to one or more bus systems of the vehicle that control vehicle functions beyond diagnostic information. The on-board diagnosis system comprises an on-board diagnosis port as a physical interface or a wired connection point or a wireless link. The on-board diagnostic system known in the art includes OBD, OBD II, EOBD, SAE, other OBD systems, engine control modules, vehicle-mounted GPS systems, integrated GPS systems, computer components of vehicle components, computer systems, computer diagnostics, sensors or any other apparatus or system known in the art capable of measuring, sensing or transmitting data about the state of a vehicle or its component parts.

### On-board Device

The term "on-board device" refers to either an external entity that is installed in a vehicle or to an integrated part of the vehicle. The on-board device is coupled to the on-board diagnosis system for collecting vehicle related data accessible to the on-board diagnosis system or to sensors coupled to the on-board device. The collected vehicle related data may be transmitted to the server.

### Vehicle Related Data

The term "vehicle related data" encompasses all data that is collected by the on-board device and transmitted to the server. Vehicle related data comprises diagnostic data and status or status change (= event) information of vehicle components obtained from the on-board diagnosis system, e.g. information about the location of the vehicle, information about opening or closing of doors, seat positions, vehicle speed, and the status of the ignition system. Vehicle related data further comprises data obtained from sensors that are part of the on-board device or that are connected to the on-board device. Vehicle related data also encompasses data relevant for detecting persons and devices in or around the vehicle.

### User

The term "user" refers to a person that is registered at the server and has an associated on-board device. Typically, personal details of a registered user are known. If the recorded details include an identification of mobile communication devices associated with the user, the on-board device may detect the presence of the user in or around the vehicle through the detected mobile communication device associated with the user.

### Passenger

The term "passenger" refers to the persons in a vehicle and includes, but is not limited to, the driver of the vehicle. The on-board device may detect a passenger in or around the vehicle by a sensor or via a mobile communication device that is associated with the passenger. As long as a passenger is not registered at the server, the server may at least determine a unique identification of detected mobile communication devices, thereby creating a location profile of mobile communication devices travelling together. As a user may be a driver of the vehicle, a user located in or around the vehicle also falls under the term "passenger". In this respect, the terms "user" and "passenger" are interchangeably used. A registered passenger refers to a passenger who has been registered at the server. A registered passenger may be identified through an associated mobile communication device.

### Mobile Communication Device

The term "mobile communication device" includes any communication device, such as a cell phone, smartphone, pager, laptop, messaging device, e-mail device, text transmission device, personal digital assistant (PDA) device, configured to send, receive, store or otherwise utilize data, audio or visual communication over a network.

### Location

The term "location" refers to any type of information from which a location may be determined. Such information comprises position data identifying longitude and latitude; any address referring to a location, e.g. a street address, a postal address; any kind of information identifying an entity located at a certain position, e.g. a company name and/or a designation of a branch. The location may also be determined by reading a tag at a known location, e.g. by a proximity sensor that may be based on RFID or Bluetooth. For example, each filling pump may have one or more tags, and the proximity sensor may determine that the vehicle is next to a particular filling pump if the sensor detects the tag or one of the tags associated with that filling pump. Alternatively or additionally, the location may be determined by identifying the vehicle through a camera at a known location, e.g. by matching the vehicle license plate with a vehicle identification retrieved through the on-board device.

### Mobility Status

The term "mobility status" refers to the motion status of a vehicle determined from data of an on-board diagnosis system of the vehicle or sensors in or around the vehicle. The sensors may either be part of the on-board device or may be accessed by the on-board device. The mobility status indicates whether the vehicle is in operation (mobility status = "driving"), whether it is parked (mobility status = "parking") or whether there is an on-going filling operation (mobility status = "fueling"). The mobility status of "parking" may be, in some embodiments, distinguished from a (short) stop, e.g., because of a red traffic light or a stop because of a traffic jam by correlating status or value changes of vehicle and sensor data. In some embodiments, an expected filling operation can be assumed if the ignition status of the vehicle indicates that the engine is off or if no vehicle motion has been detected over a certain period of time and if the present location is within the range of a filling station (mobility status = "preparing to fuel").

### Filling Station Control System

The term "filling station control system" refers to a system that controls the filling pumps of a filling station. Controlling the filling pumps comprises configuration tasks like defining the type of fuel available at the respective filling pump and defining prices. Controlling the filling pumps further comprises operational tasks like activating or deactivating a filling pump. As long as a filling pump is in a deactivated state, a user will not receive any fuel. A user may only receive fuel when the filling control system activates the respective filling pump. The filling station control system is further configured to receive trigger commands that cause an activation of an available filling pump. Available filling pumps are filling pumps that are in a working condition, i.e. that are ready to provide fuel and that are currently not in use by other customers due to an on-going filling operation or due to an ongoing payment process that has not been finalized yet. A trigger command may be sent from the server upon detecting a vehicle with a mobility status of "preparing to fuel" within a certain range of a filling station or a filling pump, respectively. In some embodiments, the server transmits an identification referring to a filling pump so that the server determines the filling pump to be activated. In some embodiments, the filling station control system chooses an available filling pump or several available filling pumps from which the user may select. In some embodiments, the filling station control system transmits status information of server triggered filling operations to the server. Such status information comprises sending a filling record about the details of the filling operation like current date and time, fuel type, quantity and price.

### Description of the Figures

The disclosure is described with reference to the attached figures. The figures are not drawn to scale and they are provided merely to illustrate the instant invention. Several aspects of the invention are described below with reference to example applications for illustration. It should be understood that numerous specific details, relationships, and methods are set forth to provide a full understanding of the invention. One having ordinary skill in the relevant art, however, will readily recognize that the invention can be practiced without one or more of the specific details or with other methods. In other instances, well-known structures or operations are not shown in detail to avoid obscuring the invention. The invention is not limited by the illustrated ordering of acts or events, as some acts may occur in different orders and/or concurrently with other acts or events. Furthermore, not all illustrated acts or events are required to implement a methodology in accordance with the invention.

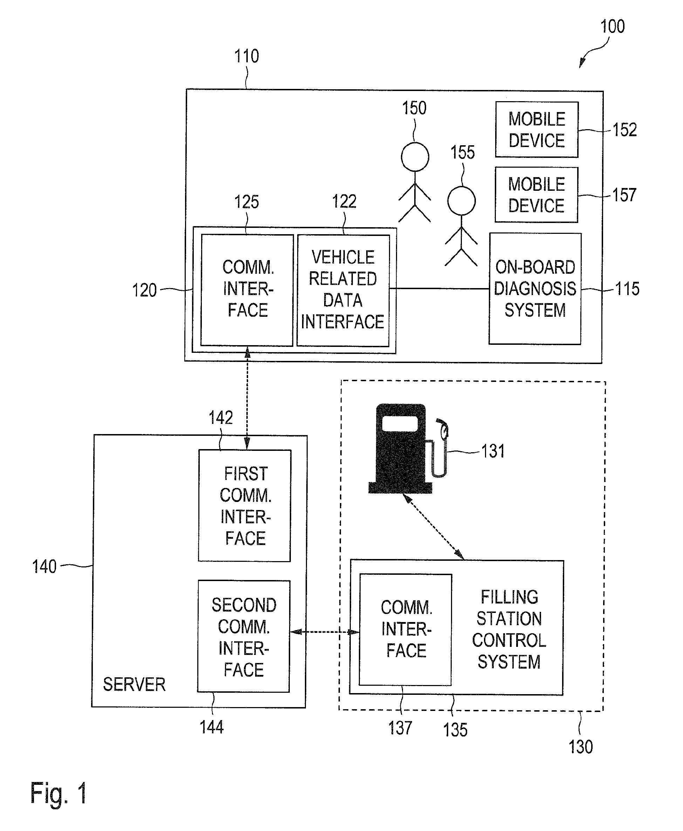

FIG. 1 shows a hardware overview 100 of a system for activating a filling pump 131 of a filling station 130. A vehicle 110 is equipped with an on-board-device 120 that is configured to collect at least location information 524. At the point of time of data collection, the location information 524 is indicative of the present location of the vehicle 110.

In some embodiments, the on-board device 120 may collect further vehicle related data 520 that is accessible to the on-board device 120. The collected location information 524 is one kind of vehicle related data 520. The term "vehicle related data" is not limited to data exclusively related to the vehicle 110. The vehicle related data 520 comprises all data that is collected by the on-board device 120, including data about persons 150, 155 and devices 152, 157 in and around the vehicle 110.

In some embodiments, the vehicle 110 comprises an on-board-diagnosis system 115 that is capable of providing data about the state of the vehicle 110. This provided data is at least one source of the vehicle related data 520. The on-board device 120 is coupled to the on-board diagnosis system 115 via a vehicle related data interface 122. In one embodiment, the on-board diagnosis system 115 is accessible via a socket in the vehicle 110 which is physically connected to a connector of the vehicle related data interface 122 of the on-board device 120. In other embodiments, the vehicle related data interface 122 may be external to the on-board device 120 and coupled to the on-board device 120 by either a wired or a wireless connection.

In some embodiments, vehicle related data is collected from one or more sensors, e.g. from a sensor that is internal to the on-board device 120, from an external sensor that is in wired connection with the on-board device 120, or from an external sensor that is in wireless connection with the on-board device 120. In one embodiment, such a sensor may comprise a receiver of a satellite navigation system, e.g. GPS, which is advantageous if the location information 524 cannot be obtained from the on-board diagnosis system 115 or with insufficient accuracy. In some embodiments, sensors of mobile communication devices 152, 157 in or around the vehicle 120 may also be accessed by the on-board device 120 to collect vehicle related data 520 therefrom. In another embodiment, the location information 524 is collected from a mobile communication device 152, 157 that belongs to a driver 150 or a passenger 155 of the vehicle 120. Such a mobile communication device 152, 157 may be a smartphone being capable of determining the present location or a navigation system that is accessed by the on-board device 120 via a wired or wireless connection.

The on-board device 120 further comprises a communication interface 125 to transmit at least the location information 524 as part of the collected vehicle related data 520 to a first communication interface 142 that is coupled to a server 140, where the received vehicle related data 560 is analyzed and stored in a database. In some embodiments, the first communication interface 142 may be external to the server 140. In some embodiments, the communication between the on-board device 120 and the server 140 is routed over the Internet. The communication interface 125 of the on-board device 120 may comprise a wireless modem to establish mobile Internet access via a mobile network operator or may request Internet access via a mobile communication device 152, 157 within or in vicinity of the vehicle 110.

In some embodiments, the communication interface 125 of the on-board device 120 supports bi-directional communication in order to send at least a portion of the collected vehicle related data 520 to the server 140 and to receive configuration or administration commands. In some embodiments, configuration or administration commands are sent from the server 140. In other embodiments, configuration or administration commands are sent from a mobile communication device 152, 157 without involving the server 140. In yet another embodiment, it is determined which configuration or administration commands are to be accepted from the server 140, from the mobile communication device 152, or from both.

In some embodiments, the on-board device 120 may be configured to define which vehicle related data 520 is to be retrieved from the on-board diagnosis system 115 over the vehicle related data interface 122 or from sensors coupled to the on-board device 120. This advantageous concept results in reduced bandwidth requirements as vehicle related data that does not need to be monitored is not even transferred into the on-board device 120. It further results in increased data privacy as the user 150, 155 may decide which vehicle related data 520 is to be collected. In some embodiments, the server 140 may configure the on-board device 120 to determine which part of the collected vehicle related data 520 is to be transmitted to the server 140. If the server 140 does not require certain vehicle related data, then this vehicle related data does not need to be collected or, if it is collected, it does not need to be transmitted to the server 140.

In some embodiments, the on-board device 120 provides a user interface directly accessible to the user 150, 155 without involving the server 140. The user interface may provide access to the entire or part of the collected vehicle related data 520. The user 150 may define which part of the collected vehicle related data 520 is accessible to the server 140. In other embodiments, configuration and administration tasks are handled over a user interface of the server 140. In such embodiments, the server 140 forwards user requests regarding the configuration and administration of the on-board device 120 to the on-board device 120.

Usually, the vehicle related data 520 is collected in regular time intervals and a timestamp may be generated to link each item of the collected vehicle related data 520 to the point of time 562 to which the collected data item belongs. For example, the vehicle related data 520 may be collected each second, each 5 seconds, each 10 seconds, each 15 seconds, each 30 seconds, each minute, each 2 minutes, each 5 minutes, or each 10 minutes. In some embodiments, the vehicle related data 520 is only collected if there is at least one change in the collected vehicle related data 520 as compared to the previous set of collected vehicle related data 520.

In other embodiments, a certain value or value ranges of determined parameters or changes of such values within a certain period of time serve as a trigger for setting an appropriate data collection time interval. For instance, the data collection time interval may be adjusted depending on the vehicle speed obtained from the on-board diagnosis system 122. The higher the vehicle speed, the shorter the data collection time interval. The data collection time intervals may also be adjusted based on detected location changes, i.e. the data is collected in time intervals that ensures detection of location changes within a determined distance as compared to the location at the previous point of time where data was collected. The data collection may also be triggered by the on-board diagnosis system 115 or by a sensor or based on configurable events. Such an event may be the detection of a filling station 130 or a filling pump 131, 132, 133, 134 in the vicinity to the on-board device 120 via a wireless connection between a communication device located at the filling station 130 and the on-board device 120.

The collected vehicle related data 520 is buffered in the on-board device 120 and at least a part of the collected vehicle related data 520 is transmitted to the server 140 in time intervals. In some embodiments, the vehicle related data 520 is sent immediately after collection. In other embodiments, the data collection time intervals differ from the data transmission time intervals. Both types of time intervals may be regular time intervals. In case of irregular data transmission intervals or if no vehicle related data 520 needs to be transmitted, the on-board device 120 may send a keep-alive message to the server 140. If transmission fails, e.g. due to temporary failure of the network or if there is no network at the current location, the on-board device 120 may buffer the collected vehicle related data 520 and will try to re-send the vehicle related data 520 in shortened data transmission time intervals.

In some embodiments, the transmitted vehicle related data only contains those parts of the collected vehicle related data 520 that have changed during the last retrieval of data. This is advantageous, as the irrelevant unchanged parts of the collected vehicle related data 520 are not sent to the server 140, thereby saving data traffic.

The system for activating a filling pump 131 of a filling station 130 comprises at least one filling station 130, wherein each filling station 130 is equipped with at least one filling pump and with a filling station control system 135. The filling station control system 135 is configured to activate a filling pump 131 so that a user 150, 155 may fill the fuel tank of a vehicle 110 by using the activated filling pump 131. As long as a filling pump remains deactivated, the filling pump does not release any fuel. For the duration of the activation of a filling pump, the filling pump releases its fuel and a user may fill the fuel tank of his or her vehicle 110 by using the activated filling pump 131. The filling station control system 135 comprises a communication interface 137 that is configured to receive a filling pump activation trigger command. Upon reception of a filling pump activation trigger command, an available filling pump 131 will be activated.

In some embodiments, the filling pump activation trigger command comprises an identification of a certain filling pump 131 that will be activated. In other embodiments, the filling pump activation trigger command comprises a plurality of identifications referring to a plurality of filling pumps 131, 132, 133, 134 so that the filling station control system may decide to activate one of these filling pumps. Optionally, the filling station control system 135 may inform the user 150, 155, e.g. via a display or via a notification, which filling pumps are available for the filling operation. The user may either select a certain filling pump by entering appropriate information into an input device or by releasing the fuel valve from a selected filling pump. By selecting a certain filling pump, the selected filling pump 131 among the available filling pumps will be activated by the filling station control system 135. In other embodiments, the filling pump activation trigger command does not specify a filling pump at all. In this case, the filling station control system 135 chooses at least one available filling pump. The filling station control system 135 may either activate one of the available filling pumps or may provide a selection of a plurality of available filling pumps to the user 150, 155.

A filling pump remains active until the user 150, 155 re-inserts the fuel valve into the corresponding filling pump 131. Apart from that, the activation of a filling pump 131 may be canceled upon time-out, e.g. when the fuel valve remains removed from the corresponding filling pump for a duration that exceeds a maximum filling up duration. Activation of a filling pump 131 may be canceled when the filled up amount of fuel exceeds a maximum amount of fuel. Activation of a filling pump 131 may further be canceled if the fuel valve has not been removed from the activated filling pump 131 within a predefined time interval, e.g. when the user does not start to fuel. Upon canceling the activation of a filling pump 131, no fuel will be released through the corresponding fuel valve.

In some embodiments, the filling station control system 135 creates a filling record comprising information about the filling operation. A filling record may comprise information that is indicative of at least one of an identification of the activated filling pump, the start time of activation of the filling pump 131, the duration of the activation, the fuel type, the amount of fuel, and/or the charged price of the fuel. In some embodiments, the filling record is transmitted to the server 140 through the communication interface 137. In some embodiments, the filling station control system 137 transmits a filling record to the on-board device 120 or to a mobile communication device 152, 157. The structure and content of the filling record sent to server 140 and to other devices may differ.

Beside the first communication interface 142 to communicate with at least one on-board device 120, the server may be further equipped with a second communication interface 144 to communicate with the communication interface 137 of at least one filling station 135. In some embodiments, the first communication interface 142 and the second communication interface 144 share the same hardware and/or software.

The server 140 comprises a database 244 that stores the location of at least one filling station 130. The database 244 further stores information required to establish communication with a certain filling station control system 135. The server 140 also comprises a database 242 to establish communication with a certain on board device 120

The server 140 receives location information 524 collected by the on-board device 120. In some embodiments, the location information 524 is indicative of the coordinates of the vehicle 110 in which the on-board device 120 is installed. Based on the stored locations of registered filling stations 130, the server 140 may determine whether the vehicle 110 is located at one 130 of the stored filling stations. The stored location may refer to certain coordinates or to an area or to a range around certain coordinates. In some embodiments, the database 142 stores location information of individual filling pumps to match the location information 524 of a vehicle 110 with a filling pump 131 in next proximity.

In some embodiments, the matching of the location of a vehicle to a filling station 130 or a certain filling pump 131 of the filling station 130 is based on sensors at the filling station 130. In one embodiment, the on-board device 120 is configured to identify a sensor by receiving a sensor identification that in turn acts as location information 524 being transmitted to the server 140. The server 140 may link the sensor identification to a certain filling station 130 or even a certain filling pump 131. In another embodiment, a sensor at a filling station 130 communicates an identification of the detected on-board device 120 or a vehicle identification to the server 140. The transmitted identification acts, together with a sensor identification, as location information 524.

The present invention is not limited to a certain way of determining whether a vehicle 110 is in proximity to a filling station 130, respectively to a certain filling pump 131 at the filling station 130. In some embodiments, it is determined whether a vehicle 110 is at a filling station 130, preferably at a certain filling pump 131, by analyzing location information 524 that is either based on coordinates or on identifications that refer to known locations.

In some embodiments, the server 140 analyzes further vehicle related data 520 to determine whether the user 150, 155 intends to fill the fuel tank of the vehicle 110. Such additional measures are especially relevant if the precision of the determined location is not sufficient to determine reliably whether the vehicle 110 is parked exactly in front of a filling pump 131. Further measures include at least one of checking whether the ignition status indicates that the engine is off, whether the fuel level is below a predefined minimum fuel threshold, whether a user has confirmed, by means of user input, his or her intention to fuel up, and whether a vehicle door opening has been detected.

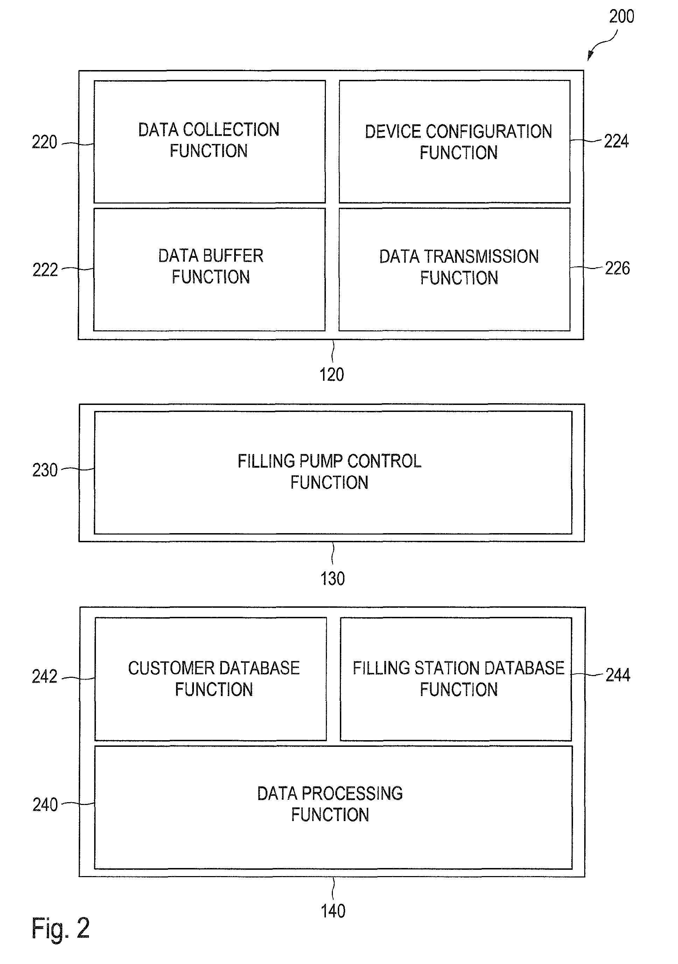

FIG. 2 shows a logical overview 200 of the system for activating a filling pump 131 of a filling station 130.

In one embodiment, the on-board device 120 comprises four inter-working functions:
- a data collection function 220 to collect the vehicle related data 520 from at least one of the on-board diagnosis system 115, from sensors, and from communication modules for the detecting mobile communication devices 152, 157 in or around the vehicle 110;
- a data buffer function 222 to buffer the collected vehicle related data 520 at least until transmission to the server 140;
- a data transmission function 224 to send at least a part of the collected vehicle related data 520, according to user and/or server specific settings and buffered by the data buffer function 222, over a communication interface 125 to the server 140; and
- a device configuration and administration function 226 to configure and administrate the on-board device 120, e.g. to define which part of available vehicle related data to collect and which part of the collected vehicle related data 520 to transfer to the server 140.

In some embodiments, the on-board device 120 comprises a plurality of communication interfaces. If one of the communication interfaces of the on-board device 120 fails to transmit the vehicle related data 520 to the server 140, then another one of the communication interfaces may try to send the vehicle related data 520. In one embodiment, the main route to the server 140 is maintained by a wireless modem built into the on-board device 120. If the wireless modem cannot establish a connection to the server 140, the on-board device 120 may make use of its built-in low range wireless connections, e.g. via a WLAN module 127 or a Bluetooth module to a mobile communication device 152, 157 of a person 150, 155 in or around the vehicle 110. These mobile communication devices may, in turn, communicate with the server 140. Alternatively, a server connection may be established via a mobile device 152, 157 connected to a wired communication port, e.g. an USB port, of the on-board device 120. In these scenarios, the vehicle related data 520 is sent to the server 140 by using an Internet connection established by the mobile device 152, 157.

In one embodiment, the filling station control system 135 comprises a filling pump control function 230 for activating and deactivating filling pumps that are assigned to the filling station control system 135. In some embodiments, the filling pump control function 230 is configured to administrate the filling pump and/or to retrieve information related to a filling operation.

In one embodiment, the server 140 comprises three inter-working functions:
- a data processing function 240 to receive vehicle related data 560 from the on-board device 120 and to process the received vehicle related data 560 to determine whether the vehicle 110 is located at a filling station 130;
- a customer database function 242 to store customer information and communication details regarding on-board-device 120 of the registered user 150, 155 and regarding the vehicle 110 in which the on-board device 120 is installed; and
- a filling station database function 246 to store location information regarding filling stations and optionally of their filling pumps.

Each of the functions may be implemented in an encapsulated hardware unit and/or software unit with an interface communicating with the other units. Each of the functions may also be combined with at least another function to be implemented in a combined unit comprising at least two functions. If implemented in software, the combination of software functions in one combined software unit may be realized in a way that is different from a grouping of functionality of the underlying hardware.

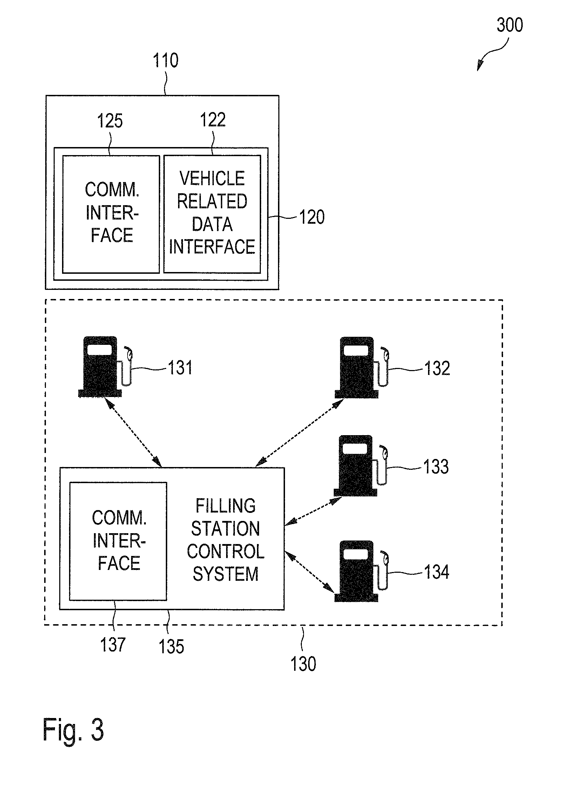

FIG. 3 shows the vehicle 110 equipped with the on-board device 120. The vehicle 110 is located at filling pump 131. The example filling station 130 comprises four filling pumps 131, 132, 133, 134 and a filling station control system 135. If the accuracy of the collected location information 524 is sufficient to determine the closest filling pump, the server 140 may send a filling pump activation trigger command to the filling station control system 135 by specifying the filling pump 131. In other embodiments, the server 140 may specify, in the trigger command, further filling pumps that are within a certain range of the present location of the vehicle, e.g. filling pumps 132, 133 and 134. When sending a list of filling pumps, the filling station control system 135 may already activate or have previously activated one or more filling pumps from the provided list of filling pumps. In some embodiments, the server 140 contacts the user 150, 155 via an assigned mobile communication device 152, 157 or via information presented through the on-board device 120 to report about the activated filling pump 131 or to retrieve user input for selecting a certain filling pump, e.g. filling pumps 132, 133 and 134. In the latter case, the server 140 transmits an identification of the selected filling pump to the filling station control system 135 which in the case of already activated filling pumps can identify the filling pump to be used by the user 150, 155. In other embodiments, the filling station control system 135 can activate the filling pump as selected by the user 150, 155.

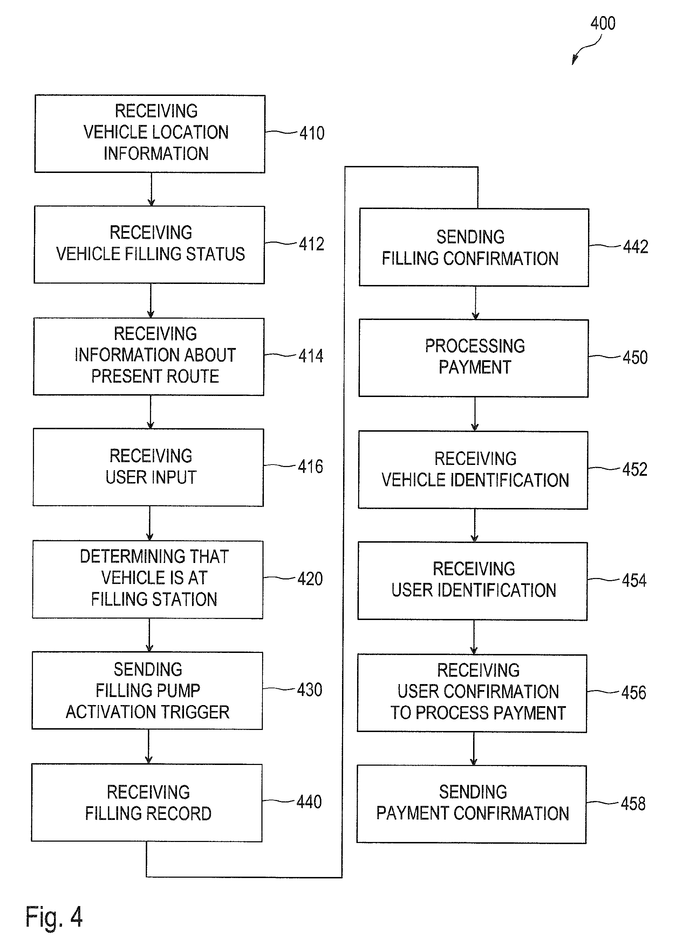

FIG. 4 shows a method for activating a filling pump 131 or filling pumps 132, 133 and 134 of a filling station 130. In step 410, the server 140 receives location information 524 that has been collected by the on-board device 120. Optionally, the server 140 may receive further vehicle related data 520. Such additional data indicates whether the driver 150 of the vehicle is actually at a filling station 130 and/or whether the driver's intention is indeed the filling of the fuel tank of vehicle 110. Such additional information may be at least one of the receiving 412 of a filling status of the vehicle, the receiving 414 of information about the present route of the vehicle, and the receiving 416 of user input that confirms the intention of filling the fuel tank of vehicle 110 and if needed selection of a filling pump.

In step 420, the server 140 matches the location information 524 of the vehicle 110 with the respective locations of filling stations 130 that are stored in the database 244. Optionally, the database 244 allows a matching of the present location of the vehicle 110 with a certain filling pump 131 or lists of filling pumps 132, 133 and 134 of a filling station 130. The step of determining 420 that the vehicle is at a filling station may comprise, in some embodiments, an analysis of further vehicle related data 520 whether the driver's intention of stopping at a filling station 130 is indeed for the purpose of filling the fuel tank. Such an analysis may be verified by informing the user about the detected mobility status of "preparing to fuel" and requesting user confirmation in order to go on.

In step 430, the server 140 sends a filling pump activation trigger command to the filling station control system 135. In turn, the filling station control system 135 activates an available filling pump and the user 150 may start fueling. Prior to sending the filling pump activation trigger command, the server 140, may, in some embodiments, verify whether the user 150, 155 and/or the vehicle 110 associated with the on-board device 120 is/are entitled to use the provided filling service. Such a verification may comprise at least one of a successful reservation of a predefined payment amount through an assigned payment resource, or an advance payment of a predefined payment amount. In other embodiments, the filling pump can already be activated and as long as the user 150, 155 and/or vehicle 110 associated with the on-board device 120 is/are known as being entitled to the filling service by the server 140, then step 430 can be skipped, and the operation can proceed with step 440.

In step 440, the server 140 receives, in some embodiments, a filling record about the details of the filling operation that has been sent by the filling station control system 135 or by the on-board device 120.

In step 442, the server 140, sends, in some embodiments, a filling confirmation to the user 150, 155. The filling confirmation contains details about the filling operation comprising at least one of the identified filling station 130, the filling pump 131, 132, 133 or 134, the date and time of the fueling, fuel type, amount of fuel and charged fuel price. The server may send the filling conformation to a registered mobile communication device 152, 157 of the user 150, 155, or to the on-board device 120 for causing the on-board device 120 to display the information or to send it to the registered mobile communication device 152, 157.

In step 450, the server 140 processes, in some embodiments, payment of the filling operation. The payment process may be initiated prior to step 430, i.e. before activating a filling pump, or after the filling operation has been finalized. In one embodiment, the payment process is split into a reservation part to reserve a predefined payment amount prior to fueling, and a payment operation. In some embodiments, the on-board device 120 sends identification information to the server 140 as a further security measure of the payment operation, e.g. the server 140 receives 452, 454 at least one of a vehicle identification and a user identification. In some embodiments, the step of processing payment may be realized by charging the payment amount from a separate account of the user or the vehicle owner, or by charging the payment from a bonus or reward account that is related to the user 150, 155 or the on-board device 120. In some embodiments, the server 140 receives 456 a user confirmation to authorize payment. In some embodiments, the server 140 sends 458 a payment confirmation to the user 150, 155.

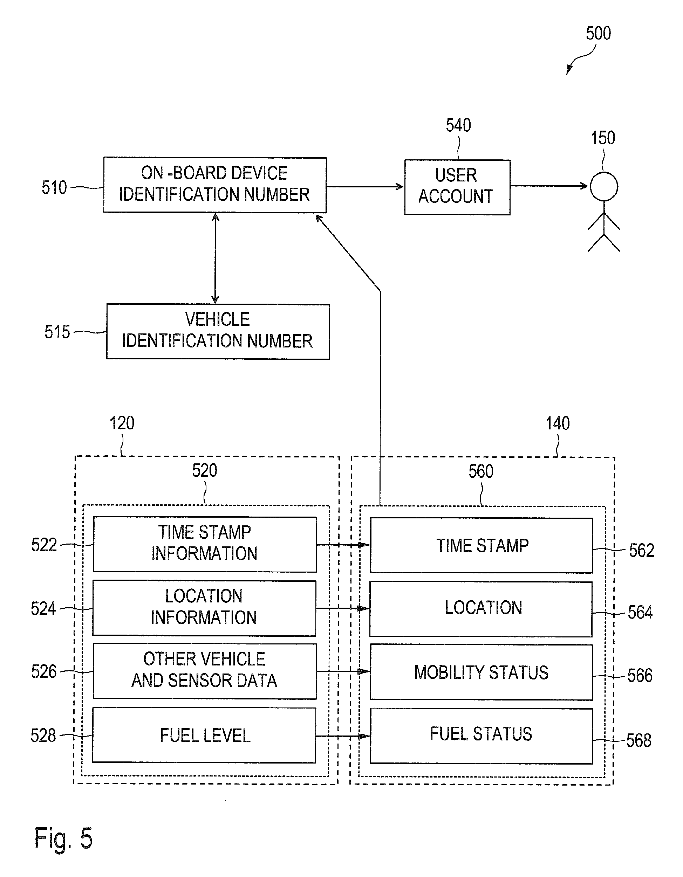

FIG. 5 shows a data relationship model of the data involved in a system for activating a filling pump 131 of a filling station 130. The received vehicle related data 560 comprises at least information that is indicative of the location 564 of the vehicle 110. The server 140 determines the location 564 of the vehicle 110 at a corresponding point of time 562 from the received vehicle related data 560. At the server 140, the location 564 at its corresponding point of time 562 is linked to an on-board device identification number 510 that uniquely identifies the on-board device 120. Alternatively or additionally, the location 564 of the vehicle 110 is linked to a vehicle identification number (VIN) 515 contained in the received vehicle related data 560 and retrieved from the on-board diagnosis system 115, thereby creating a vehicle-specific location database that tracks the movement of vehicles 110 over time. In some embodiments, the vehicle-specific database is enriched with further vehicle related data 560 received from on-board devices 120.

The term "vehicle-specific database" includes databases that link vehicle related data 560 to at least one of a vehicle identification number 515, an on-board device identification number 510, a user account 540, and to any other identification that allows the (direct or indirect) identification of a corresponding vehicle 110.

In one embodiment, a customer may purchase or rent or use a vehicle 110 with a pre-installed on-board device 120. Upon agreeing on a sales or rental contract, the personal details of the customer are forwarded to the server 140, stored in a user account 540, and linked to the on-board device identification number 510 of the pre-installed on-board device 120 and/or to the vehicle identification number 515 of the vehicle 110 in which the on-board device 120 has been pre-installed. Consequently, the customer becomes a registered user 150 to whom the user account 540 is assigned.

In another embodiment, a customer or a vehicle driver obtains an on-board device 120 either for free or purchases one for his or her vehicle 110 that has not been equipped so far with an on-board device 120. Upon receiving the on-board device 120, the customer or vehicle driver is requested to enter his or her personal details which are forwarded to the server 140, stored in a user account 540, and linked to the on-board device identification number 510 of the on-board device 120 that has been handed over to the customer or vehicle driver. Alternatively, the customer or vehicle driver may register the on-board device 120 over a user interface of the server 140 by entering his or her personal details and an information that uniquely identifies the on-board device 120, e.g. the on-board device identification number 510 or any other type of serial number uniquely related to the on-board device identification number 510. In another embodiment, the registration process is done over a user interface of the on-board device 120 that uses its communication interface 125 to register the user 150 at the server 140. In such an embodiment, there is no need for the customer or vehicle driver to enter a unique identification of the on-board device 120, as the on-board device 120 processes the registration itself and may provide the required unique identification to the server 140.

The personal details that are stored in a user account 540 at the server 140 and linked to the on-board identification number 510 of the corresponding on-board device 120 may comprise at least one of the name of the vehicle driver, the mobile phone number, e-mail address, postal address, place of residence, credit card details, bank details, and any other detail relevant for payment purposes. A customer or vehicle driver 150 having registered the corresponding on-board device 120 is referred to as registered user or simply as user 150.

Besides the registration of customers, e.g. usually the vehicle drivers 150, with an assigned on-board device 120, any other person may register at the server 140 and enter personal details that are stored in a passenger account 550. Such a registration requires at least information that allows an on-board device 120 to identify the presence of the registered person as passenger 155 of a vehicle 110, e.g. by detecting a device 157 of the passenger 155 in or around the vehicle 110.

In some embodiments, a user 150, 155 may request the transmission of collected data 520 in a reduced accuracy, e.g. for transmitting a location 524 modified with a random error or for transmitting a fuel level that distinguishes only between "low" and "high". Depending on the user's configuration or on application specific settings of the server 140, vehicle related data 560 with reduced accuracy is transmitted to the server 140. The accuracy may be reduced at least by one of applying a deliberate error to a vehicle related data value and increasing the time intervals after which new vehicle related data are sent to the server 140.

The purpose of further vehicle related data 560 beyond information about a location 564 of the vehicle 110 transmitted to the server 140 is to increase the reliability in detecting a vehicle stop at a filling station 130 for the purpose of filling the fuel tank of the vehicle 110. A benefit of estimating an expected change of the mobility status 566 is to provide services that use the mobility status changes as triggers for events, e.g. in real-time without any significant delay. In one embodiment, the mobility status 566 of "preparing to fuel" may be determined if the vehicle 110 stopped within the range of a filling station 130 or a certain filling pump 131 of the filling station, respectively. In one embodiment, the mobility status 566 of "fueling" may be determined if the vehicle 110 stopped and the fuel level is increasing. Based on a mobility status 566 of "preparing to fuel" at a determined location 564, a reservation of a predefined payment amount for the expected filling operation may be initiated. Similarly, based on a mobility status 566 of "fueling" at a determined location 564, automatic payment for the measured increase of the fuel level may be initiated when the determined fuel status 568 remains stable over a certain period of time.

In some embodiments, the vehicle driver 150 may trigger a task initiated at the server 140, e.g. to activate a filling pump or to initiate payment, by performing a user action in or around the vehicle 110 that may be detected by the on-board device 120, i.e. the user action is reflected in the collected vehicle related data 520 and transmitted to the server 140. Such a user action may cause a specific pattern in the collected vehicle related data 520 that is detected at the server 140. The detected pattern may comprise location information 564, e.g. the user action will only cause a certain effect if it is performed in an allowed location area or at a certain location.

### Implementation Mechanisms

According to an embodiment, the server 140, the filling station control system 130, the on-board device 120, and other methods and techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, server computer systems, portable computer systems, handheld devices, networking devices, smartphone devices, or any other device or combination of devices that incorporate hard-wired and/or program logic to implement the techniques.

Computing devices are generally controlled and coordinated by operating system software, such as iOS, Android, Chrome OS, Windows XP, Windows Vista, Windows 7, Windows 8, Windows Server, Windows CE, Unix, Linux, SunOS, Solaris, iOS, Blackberry OS, VxWorks, or other compatible operating systems. In other embodiments, the computing device may be controlled by a proprietary operating system. Conventional operating systems control and schedule computer processes for execution, perform memory management, provide file system, networking, I/O services, and provide a user interface functionality, such as a graphical user interface (GUI), among other things.

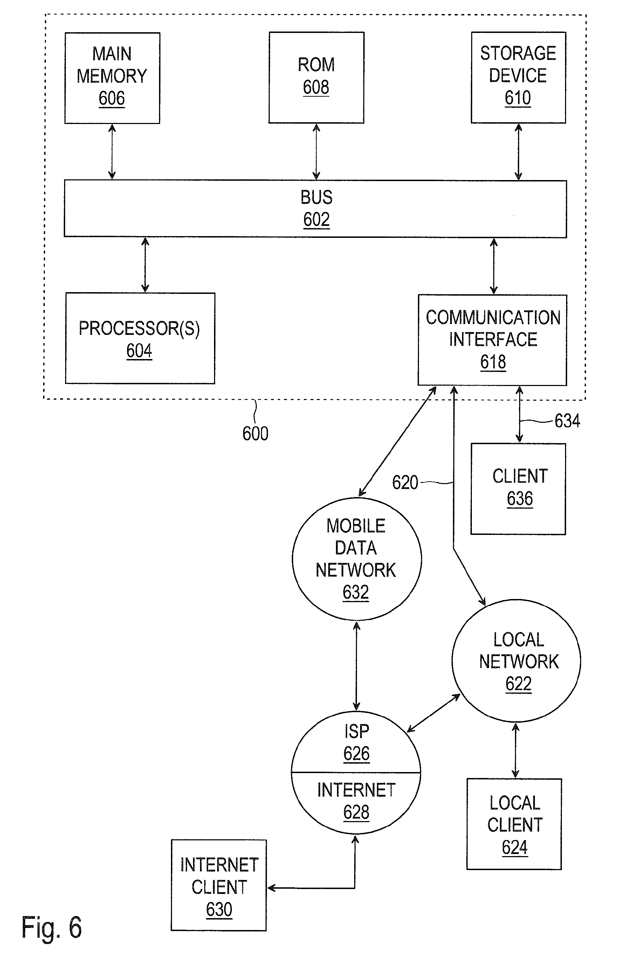

For example, FIG. 6 is a block diagram that illustrates a computer system 600 upon which the server 140, the filling station control system 135, the on-board device 120, any client device and methods discussed herein may be implemented. Computer system 600 includes a bus 602 or other communication mechanism for communicating information, and a hardware processor, or multiple processors, 604 coupled with bus 602 for processing information. Hardware processor(s) 604 may be, for example, one or more general purpose microprocessors.

Computer system 600 also includes a main memory 606, such as a random access memory (RAM), cache and/or other dynamic storage devices, coupled to bus 602 for storing information and instructions to be executed by processor 604. Main memory 606 also may be used for storing temporary variables or other intermediate information during execution of instructions to be executed by processor 604. Such instructions, when stored in storage media accessible to processor 604, render computer system 600 into a special-purpose machine that is customized to perform the operations specified in the instructions.

Computer system 600 further includes a read only memory (ROM) 608 or other static storage device coupled to bus 602 for storing static information and instructions for processor 604. A storage device 610, such as a magnetic disk, optical disk, or USB thumb drive (Flash drive), etc., is provided and coupled to bus 602 for storing information and instructions.

In some embodiments, the computer system 600 may be coupled via bus 602 to a display, such as a cathode ray tube (CRT), LCD display, or touch screen display, and/or an input device.

Computer system 600 may include a user interface module, and/or various other types of modules to implement a GUI to configure or to use the applications hosted on the computer system 600.

The modules and applications may be stored in a mass storage device as executable software codes that are executed by the computing device(s). This and other modules may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables.

In general, the words "module" or "interface", as used herein, refers to logic embodied in hardware or firmware, or to a collection of software instructions, possibly having entry and exit points, written in a programming language, such as, for example, Java, Lua, C or C++. A software module may be compiled and linked into an executable program, installed in a dynamic link library, or may be written in an interpreted programming language such as, for example, BASIC, Perl, or Python. It will be appreciated that software modules may be callable from other modules or from themselves, and/or may be invoked in response to detected events or interrupts. Software modules configured for execution on computing devices may be provided on a computer readable medium, such as a compact disc, digital video disc, flash drive, magnetic disc, or any other tangible medium, or as a digital download (and may be originally stored in a compressed or installable format that requires installation, decompression or decryption prior to execution). Such software code may be stored, partially or fully, on a memory device of the executing computing device, for execution by the computing device. Software instructions may be embedded in firmware, such as an EPROM. It will be further appreciated that hardware modules may be comprised of connected logic units, such as gates and flip-flops, and/or may be comprised of programmable units, such as programmable gate arrays or processors. The modules or computing device functionality described herein are preferably implemented as software modules, but may be represented in hardware or firmware. Generally, the modules described herein refer to logical modules that may be combined with other modules or divided into sub-modules despite their physical organization or storage.

Computer system 600 may implement the techniques described herein using customized hard-wired logic, one or more ASICs or FPGAs, firmware and/or program logic which in combination with the computer system causes or programs computer system 600 to be a special-purpose machine. According to one embodiment, the techniques herein are performed by computer system 600 in response to the one or more processors 604 executing one or more sequences of one or more modules and/or instructions contained in main memory 606. Such instructions may be read into main memory 606 from another storage medium, such as storage device 610. Execution of the sequences of instructions contained in main memory 606 causes the one or more processors 604 to perform the process steps described herein. In alternative embodiments, hard-wired circuitry may be used in place of or in combination with software instructions.

The term "non-transitory media", and similar terms, as used herein refers to any media that store data and/or instructions that cause a machine to operate in a specific fashion. Such non-transitory media may comprise non-volatile media and/or volatile media. Non-volatile media includes, for example, optical or magnetic disks, such as storage device 610. Volatile media includes dynamic memory, such as main memory 606. Common forms of non-transitory media include, for example, a floppy disk, a flexible disk, hard disk, solid state drive, magnetic tape, or any other magnetic data storage medium, a CD-ROM, a DVD-ROM, a Bluray disc, any other optical data storage medium, any physical medium with patterns of holes, a RAM, a PROM, and EPROM, a FLASH-EPROM, NVRAM, any other memory chip or cartridge, and networked versions of the same.

Non-transitory media is distinct from but may be used in conjunction with transmission media. Transmission media participates in transferring information between non-transitory media. For example, transmission media includes coaxial cables, copper wire and fiber optics, including the wires that comprise bus 602. Transmission media can also take the form of acoustic or light waves, such as those generated during radio-wave and infra-red data communications.

Various forms of media may be involved in carrying one or more sequences of one or more instructions to processor 604 for execution. For example, the instructions may initially be carried on a magnetic disk or solid state drive of a remote computer. The remote computer can load the instructions and/or modules into its dynamic memory and send the instructions over a telephone line or wireless connection using a modem. A modem local to computer system 600 can receive the data on the telephone line or the wireless connection and use appropriate circuitry to place the data on bus 602. Bus 602 carries the data to main memory 606, from which processor 604 retrieves and executes the instructions. The instructions received by main memory 606 may optionally be stored on storage device 610 either before or after execution by processor 604.

Computer system 600 also includes a communication interface 618 coupled to bus 602. Communication interface 618 provides a two-way data communication. In one example, the communication interface 618 couples to a network link 620 that is connected to a local network 622. For example, communication interface 618 may be a wired interface realized as an integrated services digital network (ISDN) card, digital subscriber line (DSL) modem, cable modem, satellite modem, or a modem to provide a data communication connection to a corresponding type of telephone line. As an example, communication interface 618 may be a local area network (LAN) card to provide a data communication connection to a compatible LAN (or WAN component to communicate with a WAN). As another example, communication interface 618 may provide the network link 620 based on a wireless connection, e.g. a Wireless LAN (WLAN) or a Wireless Wide-Area Network (WWAN). In one embodiment, the WLAN is specified according to IEEE 802.11. In another embodiment, the WWAN is specified according to IEEE 802.16. Network link 620 typically provides data communication through one or more networks to other data devices. For example, network link 620 may provide a connection through local network 622 to a local client 624 or to data equipment operated by an Internet Service Provider (ISP) 626. ISP 626 in turn provides data communication services through the world wide packet data communication network now commonly referred to as the "Internet" 628.

In yet another example, communication interface 618 may be a wireless modem to establish connection to a mobile data network 632 of a mobile network operator acting as Internet Service Provider (ISP) 626 to provide data communication services through the Internet 628. The mobile data network 632 may be, e.g., a GSM, GPRS, EDGE, UMTS, HSPA, HSDPA, HSUPA, LTE, or EVDO network.

In another example, communication interface 618 may provide a point-to-point connection 634 to a client 636 or a point-to-multipoint connection to one or more clients, either over a wired or a wireless connection. In some examples, the point-to-point or point-to-multipoint connection may be implemented over a wired connection according to the USB, Firewire, or Thunderbolt standard. In other examples, the point-to-point connection 634 to the client 636 or the point-to-multipoint connection one or more clients may be implemented as a wireless network, e.g. a Wireless Personal-Area Network (WPAN). In some embodiments, the WPAN is realized in Bluetooth or Near Field Communication (NFC) technology. Computer system 600 may also gain access to the Internet 628 by connecting to a client 636 over a point-to-point or point-to-multipoint connection if the client has Internet access and is configured to share Internet access to connected devices.

Computer system 600 may implement a plurality of communication interfaces 618 offering the same or different types of communication interfaces 618 as described above. In any such implementation, communication interface 618 sends and receives electrical, electromagnetic or optical signals that carry digital data streams representing various types of information. Local network 622 and its network link 620, mobile data network 632, and Internet 628 both use electrical, electromagnetic or optical signals that carry digital data streams. The signals through the various networks and the signals on network link 620 and through communication interface 618, which carry the digital data to and from computer system 600, are example forms of transmission media.

Computer system 600 can send messages and receive data, including program code, through the networks, links and connections coupled to communication interface 618, e.g., to communicate with the client 636 in a point-to-point or point-to-multipoint connection or with the local client 624 through the network link 620. In the Internet example, an Internet client 630 might transmit a request to computer system 600.

The data processing function 240, the customer database function 242, and the filling station database function 244 may be implemented on at least one instance of computer system 600 acting as the server 140. The functionality may be split among a plurality of computer systems 600 depending on the expected system load. The first and second communication interfaces 142, 144 of server 140 may be implemented in any of the variants disclosed for communication interface 618 which may also be realized as external component to the server 140. The server 140 may, in some embodiments, also comprise a display device and/or a keyboard, or it may be a rack based server that is controlled via a remote user interface.

Another instance of the computer system 600 may implement the data collection function 220, the data buffer function 222, the device configuration function 224, and the data transmission function 226 of the on-board device 120. The communication interface 125 of the on-board device 120 may be implemented in any of the variants disclosed for communication interface 618. There may be either a point-to-point connection 634, a point-to-multipoint connection, a network link 620, or a connection via Internet 628 between the communication interface 125 of the on-board device 120 and the first communication interface 142 of the server. In some embodiments, the on-board device 120 does not contain a display device or an input device such as a keypad. However, there are also embodiments in which certain input and/or display elements are provided.

On the other hand, also client devices used for configuring, managing, and using an application on the server 140 or the on-board device 120 may be implemented as instances of computer system 600. In an embodiment, the computer system 600 may comprise a mobile communication device 152, 157, such as a cell phone, smartphone, notebook computer and/or tablet. The system may be accessible by the driver 150 or a passenger 155 through such a mobile communication device 152, 157, among other types of electronic devices.

In an embodiment, the on-board device 120 may be accessible by the user 150, 155 through a web-based viewer, such as a web browser to remotely configure the on-board device 120, e.g. to define the parameters available for collection, to define the accuracy of the collected vehicle related data 520, or to activate and deactivate the on-board device 120, at least temporarily or based on user specific settings or events that may be detected by the on-board device 120. In other embodiments, the on-board device 120 is configurable through the server 140 which in turn provides a web-based interface to handle the configuration tasks of the on-board devices 120.

Each of the processes, methods, and algorithms described in the preceding sections may be embodied in, and fully or partially automated by, code modules executed by one or more computer systems or computer processors comprising computer hardware. The processes and algorithms may be implemented partially or wholly in application-specific circuitry.

The various features and processes described above may be used independently of one another, or may be combined in various ways. All possible combinations and subcombinations are intended to fall within the scope of this disclosure. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed example embodiments. The example systems and components described herein may be configured differently than described. For example, elements may be added to, removed from, or rearranged compared to the disclosed example embodiments.

Conditional language, such as, among others, "can", "could", "might", or "may", unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Any process descriptions, elements, or blocks in the flow diagrams described herein and/or depicted in the attached figures should be understood as potentially representing modules, segments, or portions of code which include one or more executable instructions for implementing specific logical functions or steps in the process. Alternate implementations are included within the scope of the embodiments described herein in which elements or functions may be deleted, executed out of order from that shown or discussed, including substantially concurrently or in reverse order, depending on the functionality involved, as would be understood by those skilled in the art.

It should be emphasized that many variations and modifications may be made to the above-described embodiments, the elements of which are to be understood as being among other acceptable examples. All such modifications and variations are intended to be included herein within the scope of this disclosure. The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated. The scope of the invention should therefore be construed in accordance with the appended claims and any equivalents thereof.

## Claims

1. A method for activating a filling pump of a filling station, the method comprising:
receiving, from a vehicle, location information of the vehicle;
determining, based on the received location information, that the vehicle is at a filling station; and
sending, to the filling station, a filling pump activation command that causes the filling station to activate an available filling pump of the filling station for the purpose of a filling operation.

2. The method of claim 1, further comprising:
receiving, from at least one of the filling station and the vehicle, a filling record that comprises information concerning the filling operation, wherein, in some embodiments, the filling record is indicative of at least one of the amount of fuel with which the vehicle has been filled up or the purchasing price of the fuel.

3. The method of claim 1 or claim 2, further comprising:
receiving, from the vehicle, at least one of a vehicle identification and a user identification related to a driver or a passenger of the vehicle.

4. The method of any of claims 1 to 3, further comprising:
receiving operational data of the vehicle,
wherein the operational data of the vehicle comprises at least one of a filling status of a fuel tank of the vehicle, a door open/closed status of the vehicle, a door opening/closing event of the vehicle, and an event of switching on the ignition of the vehicle.

5. The method of claim 4, wherein the operational data of the vehicle indicates the end of the filling operation or the leaving of the vehicle from the filling station, and wherein the method further comprises sending, to the filling station, a filling pump activation command that causes the filling station to re-activate the same filling pump for the next vehicle.

6. The method of any of claims 1 to 5, wherein determining that the vehicle is at a filling station comprises determining that the location of the vehicle is within a certain range of the coordinates of the filling station or of a filling pump of the filling station.

7. The method of any of claims 1 to 6, wherein determining that the vehicle is at a filling station is further based on at least one of the route of the vehicle to its present location, the filling level of the fuel tank of the vehicle, and user input provided by a driver or a passenger of the vehicle.

8. The method of any of claims 1 to 7, wherein the filling pump activation command comprises an identification of at least one filling pump of the filling station that is available for filling up the vehicle.

9. The method of any of claims 1 to 8, further comprising:
processing payment of the filling operation based on a received vehicle identification.

10. A method for requesting a server to activate a filling pump of a filling station, the method comprising:
determining location information of a vehicle;
sending, to the server, the location information of the vehicle;
retrieving at least one of a vehicle identification and a user identification related to a driver or a passenger of the vehicle; and
sending, to the server, the retrieved identification.

11. The method of claim 10, further comprising:
sending, to the server, operational data of the vehicle,
wherein the operational data of the vehicle comprises at least one of a filling status of the fuel tank of the vehicle, a door open/closed status of the vehicle, a door opening/closing event of the vehicle, and an event of switching on the ignition of the vehicle.

12. The method of claim 10 or claim 11, further comprising:
receiving, from the server, a payment confirmation request;
presenting the payment confirmation request to the driver or a passenger of the vehicle;
upon confirmation by the driver or the passenger of the vehicle, sending, to the server, the payment confirmation as a prerequisite to payment processing.

13. A server, comprising:
a filling station database that stores the location of at least one filling station;
a first communication interface for receiving location information from at least one on-board device of a vehicle; and
a second communication interface for communicating with at least one filling station;
wherein the server is configured to perform the operations as recited in any of claims 1 to 9.

14. An on-board device to be installed in a vehicle for requesting a server to activate a filling pump of a filling station, the on-board device comprising:
a communication interface for communicating with the server;
wherein the on-board device is configured to collect data by retrieving location information of the vehicle from at least one of (i) an on-board diagnosis system of the vehicle via a vehicle related data interface, (ii) a receiver of a satellite navigation system coupled to the on-board device, or (iii) a proximity sensor; and
wherein the on-board device is configured to perform the operations as recited in any of claims 10 to 12.

15. A computer-readable medium comprising a set of instructions that causes one or more processors of a system, when executed on the one or more processors, to perform the operations as recited in any of claims 1 to 12.
